# EUROPÄISCHE PATENTSCHRIFT

(11) **EP 4 283 163 B1**
(45) Veröffentlichungstag und Bekanntmachung des Hinweises auf die Patenterteilung: **24.09.2025**
(21) Anmeldenummer: 22175185.2
(22) Anmeldetag: 24.05.2022
(51) Int. Cl.: F16H 25/22

(54) **KUGELGEWINDETRIEB**
BALL SCREW
VIS D'ENTRAÎNEMENT À BILLES

(43) Veröffentlichungstag der Anmeldung: 29.11.2023
(73) Patentinhaber: SFS Group International AG, 9435 Heerbrugg (CH)
(72) Erfinder: Zach, Marijo, 9443 Widnau (CH); Sinz, Daniel, 6921 Kennelbach (AT); Hanselmann, Jasmine, 9450 Altstätten (CH); Sieber, Ralph, 9444 Diepoldsau (CH)

(56) Entgegenhaltungen:
- WO-A1-2019/015710
- JP-A- 2007 071 268
- JP-B2- 4 462 458
- US-A1- 2002 028 122
- US-A1- 2013 199 324

## Beschreibung

Die vorliegende Erfindung befasst sich mit einem Kugelgewindetrieb, insbesondere dem verbesserten und vereinfachten Aufbau der Kugelumlenkung eines Kugelgewindetriebes.

### TECHNISCHER HINTERGRUND

Kugelgewindetriebe (KGT) spielen heute eine zunehmende Rolle in elektromechanischen und elektro-hydraulischen Bremssystemen, wo KGT als Ersatz für hydraulische Bremszylinder oder parallel zu bekannten Bremssystemen bei Bremsassistenzsystemen eingesetzt werden.

Als Kugelgewindetrieb KGT wird üblicherweise ein Wälzschraubtrieb bezeichnet mit Kugeln als Wälzkörpern. Zu den Hauptbestandteilen eines KGT zählen eine Gewindespindel und eine diese Spindel umgreifende Spindelmutter. Zwischen diesen beiden Bauteilen laufen im Betrieb Kugeln um. Die Gewindezüge der Gewindespindel wie auch der Spindelmutter sind als Kugelrillen mit einem geeigneten Profil ausgebildet und komplementär so aufeinander abgestimmt, dass sie (im montierten Zustand) gemeinsam einen Kugelkanal bzw. eine Kugelführung bilden. Anders als bei einer Schraube-Mutter-Verbindung, bei der die Gewindeflanken flächig aufeinander gleiten, übernehmen beim KGT die umlaufenden Kugeln im Gewinde die Lastübertragung zwischen Mutter und Spindel. Die flächige Gleitbewegung wird also durch eine (Ab-)Rollbewegung ersetzt, was mit verringerter Reibung einhergeht.

Um einen geschlossenen Umlaufpfad für die Kugeln zu erhalten, werden Kugelrückführungen eingesetzt. Diese setzen sich funktionell (häufig auch strukturell) zusammen aus zwei Kugelumlenkungen und einem dazwischenliegenden Überleitkanal. Die Kugelumlenkungen haben die Aufgabe, die Kugeln an einer ersten Stelle aus der Kugelführung zwischen Spindelmutter und Gewindespindel herauszuheben und an einer zweiten Stelle wieder zuzuführen. Eine Kugelrückführung stellt also als Ganzes einen Bypass dar, der eine oder mehrere Gewindezüge des Mutter-Spindelsystems überbrückt und so einen geschlossenen Umlaufpfad für die Kugeln eines KGT bildet. In der Regel werden die Kugeln in der Spindelmutter radial nach aussen aus der Kugelrille ausgehoben und innerhalb oder ausserhalb der Spindelmutter in einem Kanal oder einem Rohr (dem Überleitkanal) geführt, bevor sie an der dafür vorgesehenen Stelle wieder in den Kugelkanal zwischen Gewindespindel und Spindelmutter eingesetzt werden. Die Kräfte, die beim Ausheben der Kugeln aus der Kugelführung frei werden, müssen von der Kugelumlenkung aufgenommen bzw. abgeleitet werden. Daher ist die Befestigung bzw. Sicherung der Kugelumlenkungen in / an der Spindelmutter eine technische Herausforderung.

### STAND DER TECHNIK

Im Stand der Technik EP 3 809 013 A1 ist eine einteilig ausgeführte Kugelumlenkung beschrieben, welche eine ovale Grundform besitzt und so in eine entsprechend geformte Öffnung in der Wand einer Spindelmutter eingesetzt werden kann. Sie ist so ausgeführt, dass sie sowohl zum Ausheben wie auch zum Wiedereinführen von Kugeln in den Kugelkanal eingesetzt werden kann. Die Fixierung dieser Kugelumlenkungen erfolgt üblicherweise durch eine über die Spindelmutter aufgeschobene Hülse, die die Lage der Kugelumlenkungen sichert.

Im Stand der Technik EP 1 375 966 A2 ist eine aus zwei Halbschalen gefertigte Kugelrückführung beschrieben, die die Kugelumlenkungen und den Überleitkanal kombiniert. In einer Variante wird dort beschrieben, dass ebenfalls eine zylindrische Hülse für die Fixierung verwendet wird. Zusätzlich wird dort ein Federelement zwischen der Kugelrückführung und der Hülse angeordnet, das die Kugelrückführung in der Sollposition fixiert. Auch aus US2013/199324 und WO2019/015710 sind Kugelgewindetriebe bekannt.

Alternativ zur Sicherung mittels Hülse ist es bekannt, an der der Kugelrückführung Schnapp- und/oder Rastvorrichtungen vorzusehen, die in entsprechende Öffnungen der Spindelmutter eingreifen. Dann kann meist auf zusätzliche mechanische Sicherungen verzichtet werden. Diese Fixiervorrichtungen nach dem Stand der Technik haben jeweils spezifische Nachteile: Übergeschobene Hülsen sind zwar günstig in der Herstellung und Montage, erlauben aber nicht die Befestigung des Kugelgewindetriebes im Bereich der Hülse. Rastzungen und Schnappvorrichtungen müssen so robust ausgelegt werden, dass sie den Kräften standhalten können, welche die Kugeln auf die Kugelumlenkung ausüben. Zudem müssen die Fertigungstoleranzen der Kugelumlenkungen und der korrespondierenden Halteöffnungen in der Spindelmutter so genau sein, dass die Funktion der Kugelrückführung stets gewährleistet ist. Die Aufgabe der vorliegenden Erfindung ist daher, einen Sicherungsmechanismus für eine Kugelumlenkung vorzustellen, die die Nachteile vermeidet und zudem sicher und einfach in der Anwendung ist.

### BESCHREIBUNG DER ERFINDUNG

Ein Kugelgewindetrieb der genannten Art umfasst in seinen Grundzügen eine Gewindespindel und eine Spindelmutter. Diese umschliesst die Gewindespindel koaxial zumindest teilweise wie eine hohlzylindrische Hülle. Dadurch besitzt die Spindelmutter eine im Wesentlichen zylindrische (radial äussere) Mantelfläche. Lokale Abweichungen von der zylindrischen

Form, z.B. in Form von Halteelementen, Abflachungen, eckigen Flanschen, seien vom Begriff "im Wesentlichen zylindrisch" mitumfasst. Es sei angemerkt, dass eine zylindrische / hülsenförmige Aussenfläche die bevorzugte Ausführungsform ist; die Erfindung ist aber auch auf vieleckige Mantelflächen äquivalent anwendbar.

Im Zwischenraum zwischen Gewindespindel und Spindelmutter laufen in einem helixförmigen Kugelkanal eine Vielzahl von Kugeln um. Um zumindest eine endlose Kugelbahn zu erreichen, ist mindestens eine Kugelrückführung mit zwei Kugelumlenkungen und einem zwischen diesen verlaufenden Überleitkanal notwendig. Grundsätzlich können so eine oder mehrere Windungen der helixförmigen Kugelbahn zwischen Gewindespindel und Spindelmutter überbrückt werden. Der Überleitkanal wird daher auch als Kugelrückführung bezeichnet.

Die Kugelumlenkungen sind als Bauelemente in radialen Durchtrittsöffnungen in der Spindelmutter so angeordnet, dass die Kugeln - je nach Drehrichtung des Kugelgewindetriebs - von der einen Kugelumlenkung aus dem Kugelkanal radial ausgehoben und in den Überleitkanal umgelenkt werden. Nach dessen Durchlaufen werden die Kugeln von der anderen Kugelumlenkung aus dem Überleitkanal zurück in den Kugelkanal geleitet. Beim Ändern der Drehrichtung tauchen die Kugelumlenkungen (funktionell) die Rollen.

Erfindungsgemäss werden an der Spindelmutter ein oder mehrere Metallplättchen vorgesehen, die in und/oder benachbart zu den radialen Durchtrittsöffnungen von der Mantelfläche weg nach innen versetzt angeordnet sind und die Kugelrückführung zumindest teilweise flächig überspannen. Mit "in und/oder benachbart zu den radialen Durchtrittsöffnungen" wird ausgedrückt, dass ein Plättchen eine Durchtrittsöffnung ganz oder teilweise überspannen kann, aber auch in benachbarten Flächen zu den Durchtrittsöffnungen rückverankert werden können, wo dies technisch notwendig oder sinnvoll ist.

Dadurch wird die Kugelrückführung mit ihren Kugelumlenkungen in einer Sollposition im Mantel der Spindelmutter fixiert. Dabei wird die Mantelfläche der Spindelmutter von den endmontierten Metallplättchen nicht überragt.

Die Befestigung der Metallplättchen in oder benachbart zu den Durchtrittsöffnungen der Spindelmutter erfolgt durch Punktverschweissen, Verkleben oder Verklemmen.

Der erfinderische Vorteil dieser Bauart liegt darin, dass die Kugelrückführung die Aussenkontur des Kugelgewindetriebs nicht stört, was die Befestigung des KGT über die Spindelmutter erleichtert.

Der Überleitkanal wird hier in zwei grundsätzlichen Varianten beschrieben; der Fachmann kann aber die o.a. erfinderischen Merkmale fallweise auch auf andere Entwürfe bzw. Auslegungen übertragen. Der Überleitkanal kann einmal als längs eingepresster, radial nach aussen offener Kanal in der Spindelmutter ausgeführt werden, z. B. durch Kaltumformung bei der Herstellung der Spindelmutter. In zweiter Variante kann der Überleitkanal als Längsbohrung ausgeführt werden im Mantel der Spindelmutter, parallel zur Rotationsachse der Spindelmutter. Die Durchtrittsöffnungen für die Kugelumlenkungen werden dann z.B. durch Fräsen aus dem Mantel der Spindelmutter herausgearbeitet, um einen Abschnitt der Längsbohrung oder des Presskanals als Überleitkanal zu definieren.

Die Kugelrückführung für einen hier beschriebenen Kugelgewindetrieb kann in einer Ausführungsform einteilig realisiert werden mit zwei Kugelumlenkungen und einem dazwischen angeordneten, rohrförmigem Überleitkanal (achsparallele Längsbohrung im Mantel der Spindelmutter.

Eine Kugelrückführung kann auch aus Einzelstücken, beispielsweise aus Kunststoff und/oder Metall zusammengefügt werden und in einer Nut angeordnet werden. Diese Nut ist in der Mantelfläche eingelassen und der Form der Kugelrückführung angepasst bzw. für sie optimiert. Die Einzelstücke können beispielsweise dem Prinzip "Rinne mit Dach" oder "rohrförmiger Überleitkanal mit angefügten Endstücken" folgen. Letzteres liegt funktionell auch vor, wenn die Kugelrückführung aus zwei einstückig ausgeführten und separat in radialen Durchtrittsöffnungen eingesetzten Kugelumlenkungen aufgebaut ist mit einer dazwischenliegenden Längsbohrung als Überleitkanal. Alternativ kann der Überleitkanal auch als diskretes Bauteil in einem trogförmigen Kanal angeordnet werden.

Die oben beschriebenen Metallplättchen, welche die Kugelrückführung bzw. deren Teile sichern, werden die einhüllende Oberfläche bzw. Mantelfläche der eigentlichen Spindelmutter im endverbauten Zustand nicht überragen. Folgende Varianten sind hierbei möglich: Die Metallplättchen in ihrer endmontierten Position schliessen bündig mit der Mantelfläche der Spindelmutter ab, ergänzen somit die Mantelfläche zur ursprünglichen Ausgangform. Alternativ können die Metallplättchen in ihrer endmontierten Position zumindest teilweise versenkt in der Mantelfläche der Spindelmutter angeordnet sein. Mischformen (bündig / versenkt) sind technisch nicht ausgeschlossen. Welche Möglichkeit gewählt wird, hängt massgeblich von der geometrischen und konstruktiven Auslegung der Spindelmutter ab.

In einer weiteren Ausbildungsform eines Kugelgewindetriebs können die Metallplättchen die Fixierung der Kugelumlenkungen bzw. der Kugelrückführung durch einen federnden Anpress-Kontakt sicherstellen. Zusätzlich kann zwischen den Metallplättchen und der Kugelrückführung bzw. den Kugelumlenkung(en) eine dämpfende und/oder federnde Zwischenlage vorgesehen werden. Eine solche Zwischenlage aus einem elastischen Material kann helfen, Fertigungstoleranzen zu kompensieren und wird die Übertragung von Körperschall von der Kugelrückführung bzw. Kugelumlenkung zur Spindelmutter verringern.

Die hier angesprochenen Metallplättchen werden bevorzugt aus Federstahl gefertigt und zur Herstellung insbesondere aus Federstahlblech ausgestanzt. Je nach Anforderung wird die Materialstärke 0.05 bis 0.25mm betragen. Bekannte Stahlsorten mit federnden Eigenschaften sind unter der Bezeichnung C75S (1.1248) bzw. 1.4310 CrNi am Markt erhältlich.

Für bestimmte Anwendungen können die Metallplättchen so ausgelegt werden, dass sie eine Wölbung entlang einer Achse aufweisen. Dadurch können sie bei der Montage so ausgerichtet werden, dass in montierter Endlage das (die) Metallplättchen eine dauernde Drucckraft auf eine Kugelrückführung bzw. die Kugelumlenkung(en) ausübt bzw. ausüben. Die Wölbung kann durch Prägung zeitgleich mit dem Ausstanzen erfolgen.

Je nach Aufgabenstellung für den Kugelgewindetrieb kann es erforderlich oder sinnvoll sein, dass mindestens ein Metallplättchen eine radiale Durchtrittsöffnung vollflächig verschliesst. Dies kann erforderlich sein um Eindringen von Verschmutzung in den Bereich der umlaufenden Kugeln zu vermindern oder zu vermeiden.

Alternativ kann es ausreichen, wenn mindestens ein Metallplättchen die radiale Durchtrittsöffnung teilweise überdeckt, wenn dies für die Funktion der Sicherung der Kugelrückführung ausreicht. Auch ist, je nach Auslegung des KGT, es möglich, dass mindestens ein Metallplättchen mehrere radiale Durchtrittsöffnungen ganz oder teilweise überdeckt.

Die hier beschriebenen Ausführungsformen und Varianten sind vielfältig kombinierbar. Auch dort wo technische Alternativen beschrieben wurden (z.B. Überleitkanal als Längsbohrung oder als Nut) sind die Anwendungs- und Kombinationsmöglichkeiten der beschriebenen und gezeigten Varianten für den Fachmann auf Basis dieser Beschreibung und der Zeichnungen klar zuzuordnen.

Die Herstellung eines hier beschriebenen Kugelgewindetriebes lässt sich vereinfacht wie folgt beschrieben:
- Das Bereitstellen von Bauteilen einer Kugelrückführung je nach oben beschriebener Variante.
- Das Bereitstellen einer vorassemblierten Baugruppe aus mindestens einer Spindelmutter und einer Gewindespindel, wobei die Spindelmutter zwei radial nach innen angelegte Durchbrüche aufweist. Deren Kontur ist so ausgeführt, dass sie die Umlenkungen aufnehmen kann. Die Durchbrüche werden durch einen Überleitkanal verbunden.
- Das Einsetzen der Kugelumlenkungen / Kugelrückführung in die Mantelfläche der Spindelmutter.
- Das Einbringen einer Mehrzahl von Kugeln in den Kugelgewindetrieb.
- Positionieren eines Metallplättchens im Bereich einer Durchtrittsöffnung in der Spindelmutter
- Befestigen des Metallplättchens mittels Laserschweissen, Verklemmen, Verkleben.

### KURZBEZEICHNUNG DER FIGUREN

Figur 1 zeigt schematisch im Teilschnitt ein KGT in einer ersten Ausführungsform der Erfindung.
Figur 2 zeigt ein KGT unter Weglassung der Spindelmutter. Dies verdeutlicht den Umlauf der Kugeln.
Figur 3 zeigt einen Längsschnitt durch einen Kugelgewindetrieb in einer zweiten Ausführungsform.
Figur 4 zeigt eine Draufsicht auf ein KGT in einer dritten Ausführungsform
Figur 5 zeigt eine vierte Ausführungsform der Erfindung.

### BESCHREIBUNG DER FIGUREN

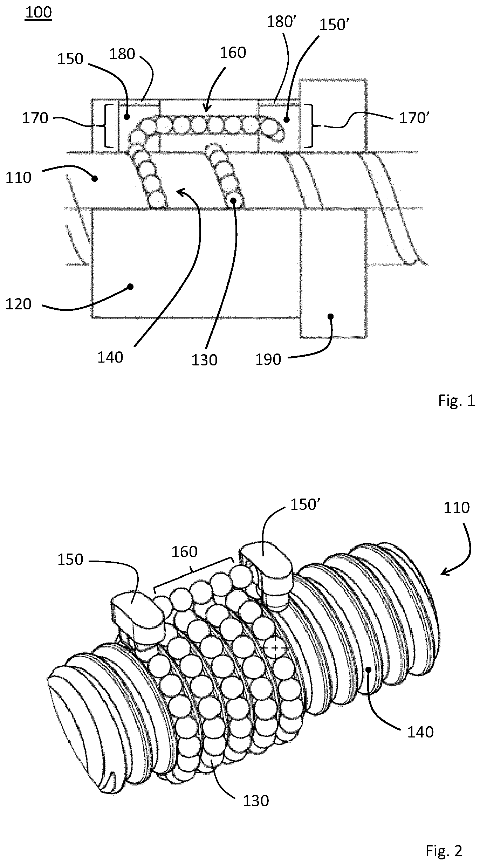

Figur 1 zeigt ein KGT (Kugelgewindetrieb) 100 im Teilschnitt. Die innenliegende Gewindespindel 110 weist die innere Hälfte des helixförmigen Kugelkanal 140 auf, der mit seinem entsprechenden Gegenstück, dem als Innengewinde der Spindelmutter 120 ausgelegten Kanal zusammenwirkt. Die Kugeln 130 laufen dank der Kugelrückführung endlos um. Die Kugelrückführung setzt sich hier aus einer ersten Kugelumlenkung 150, einem Überleitkanal 160 und einer weiteren Kugelumlenkung 150' zusammen. Die Kugelumlenkungen 150, 150' sind in Durchtrittsöffnungen 170, 170' versenkt, die wiederum durch Metallplättchen180, 180' verschlossen sind. Die Durchtrittsöffnungen sind Bohrungen oder Fräsungen in der Spindelmutter 120, die radial von innen nach aussen reichen und der Aufnahme der Kugelumlenkungen dienen. Die Kugelumlenkungen sind als rohr- bzw. rinnenförmige Bauelemente so gestaltet, dass sie die Kugeln aus dem Kugelkanal 140 entlasten und sowohl radial nach aussen wie auch zum Überleitkanal hin umleiten. Wie erwähnt existieren eine Vielzahl von Typen der Überleitkanäle: Als achsparallele Nuten oder Bohrungen in der Spindelmutter, als diskrete Bauteile oder als zusammengesetzte Elemente aus Metall und/oder Kunststoff.

Die Spindelmutter ist hier als im Wesentlichen zylindrischer Körper gezeigt mit einem radial vergrösserten Flansch 190.

Figur 2 zeigt illustrativ den endlosen Kugelumlauf in einem KGT mit weggelassener Spindelmutter. Die Kugeln 130 werden im spiralförmigen Kugelkanal 140 geführt. Eine Kugelumlenkung 150 entnimmt die Kugeln aus dem Kugelkanal leitet sie in den Überleitkanal 160 an dessen eine weitere Kugelumlenkung 150' die Kugeln 130 wieder in den Kugelkanal 140 zurückspeist.

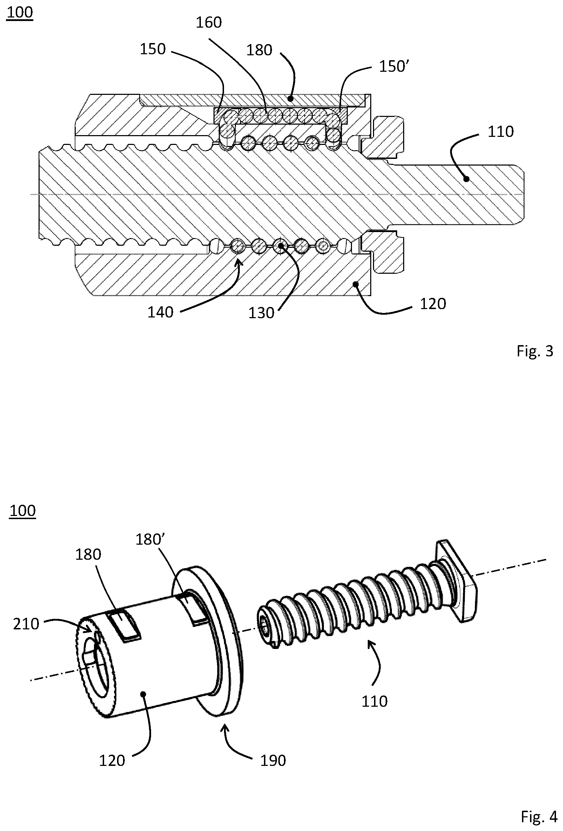

Figur 3 zeigt eine zweite Ausführungsform der Erfindung im Längsschnitt. Der Kugelgewindetrieb 100 besteht wieder aus der Gewindespindel 100 und der Spindelmutter 120, die zwischen sich den helixförmigen Kugelkanal 140 mit darin geführten Kugeln 130 bilden. Die Kugelrückführung ist in einer Vertiefung in der Spindelmutter 120 realisiert, die auch die Durchtrittsöffnungen für die eingesetzten Kugelumlenkungen 150, 150' mitumfasst. Erkennbar bildet das Metallplättchen 180 in dieser Ausführungsform das nach aussen bzw. oben abschliessende Dach des Überleitkanals 160. Der in der Figur horizontal gezeigte Abschnitt des Überleitkanals 160 ist als ausgefräste Nut realisiert.

Figur 4 zeigt eine Realisierung eines KGT, wobei die Gewindespindel 110 getrennt gezeigt ist. Der Überleitkanal ist als achsparallele Längsbohrung 210 realisiert. Von den radialen Durchtrittsöffnungen, die die Kugelumlenkungen aufnehmen, sind nur noch die Metallplättchen 180, 180' erkennbar, die den Abschluss bilden. Erkennbar ist, dass die ursprünglich zylindrische Aussenkontur der Spindelmutter dadurch nicht überragt wird.

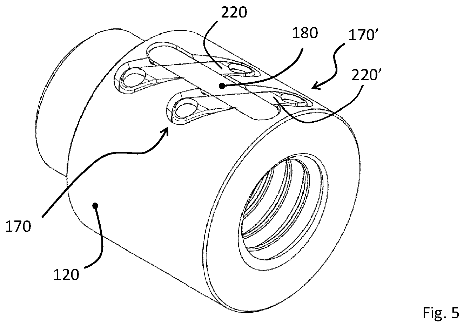

Figur 5 zeigt eine weitere Variante einer Spindelmutter 120 ohne Gewindespindel in perspektivischer Ansicht mit zwei Kugelumlenkungen 220, 220'. Die Durchtrittsöffnungen 170, 170' sind Teil je einer Nut in der Gewindespindel 120, die eine einteilige, einzusetzende Kugelrückführung 220 bzw. 220' umfasst. Ein einzelnes Metallplättchen 180 analog einer Bandage sichert die beiden Kugelumlenkungen. Hier sind die Metallplättchen sowohl in als auch

## Patentansprüche

1. Kugelgewindetrieb (100) umfassend:
- eine Gewindespindel (110) und
- eine Spindelmutter (120), die die Gewindespindel (110) koaxial zumindest teilweise umschliesst, wobei die Spindelmutter eine im Wesentlichen zylindrische Mantelfläche (120) aufweist;
- einer Vielzahl von Kugeln (130), die im Zwischenraum zwischen Gewindespindel (110) und Spindelmutter (120) in einem helixförmigen Kugelkanal (140) umlaufen; und
- mindestens eine Kugelrückführung mit zwei Kugelumlenkungen (150, 150') und einem zwischen diesen verlaufenden Überleitkanal (160); wobei die Kugelumlenkungen (150, 150') in radialen Durchtrittsöffnungen (170, 170') in der Spindelmutter (120) so angeordnet sind, dass die Kugeln (130) je nach Drehrichtung des Kugelgewindetriebs (100) von der einen Kugelumlenkung (150) aus dem Kugelkanal (140) radial ausgehoben und umgelenkt werden in den Überleitkanal (160) und nach dessen Durchlaufen von der anderen Kugelumlenkung (150') aus dem Überleitkanal (160) in den Kugelkanal (140) zurückgeleitet werden;
- wobei der Überleitkanal mehrere Windungen der helixförmigen Kugelbahn überbrückt;
wobei an der Spindelmutter ein oder mehrere Metallplättchen (180) vorgesehen sind, die in und/oder benachbart zu den radialen Durchtrittsöffnungen (170, 170') von der Mantelfläche weg nach innen versetzt angeordnet sind und die Kugelrückführung flächig überspannen; und so die Kugelrückführung mit ihren Kugelumlenkungen (150, 150') in einer Sollposition im Mantel der Spindelmutter (120) fixieren, wobei die Mantelfläche der Spindelmutter (120) von den endmontierten Metallplättchen (180, 180') nicht überragt wird; **dadurch gekennzeichnet dass** die Metallplättchen (180, 180') in und/oder benachbart zu den Durchtrittsöffnungen (170, 170') der Spindelmutter (120) punktverschweisst, verklebt oder in ihr verklemmt werden.

2. Kugelgewindetrieb (100) nach Anspruch 1,
**dadurch gekennzeichnet, dass**
der Überleitkanal (160) als längs eingepresster, radial nach aussen offener Kanal oder als Längsbohrung (210) ausgeführt ist, die im Mantel der Spindelmutter (120) parallel zur Rotationsachse der Spindelmutter (120) eingebracht ist.

3. Kugelgewindetrieb (100) nach Anspruch 1 oder 2 **dadurch gekennzeichnet, dass** die Kugelrückführung einteilig ausgeführt ist mit zwei Kugelumlenkungen (150, 150') und einem dazwischen angeordneten rohrförmigem Überleitkanal (160).

4. Kugelgewindetrieb (100) nach Anspruch 1 oder 2, **dadurch gekennzeichnet, dass** die Kugelrückführung zwei einstückig ausgeführte und separat in radialen Durchtrittsöffnungen (170, 170') eingesetzte Kugelumlenkungen sowie eine dazwischenliegende Längsbohrung (210) als Überleitkanal umfasst.

5. Kugelgewindetrieb (100) nach einem oder mehreren der Ansprüche 1-4, **dadurch gekennzeichnet, dass** die Metallplättchen (180, 180') in ihrer endmontierten Position bündig mit der Mantelfläche der Spindelmutter (120) abschliessen.

6. Kugelgewindetrieb (100) nach einem oder mehreren der Ansprüche 1-4 **dadurch gekennzeichnet, dass** die Metallplättchen (180, 180') in ihrer endmontierten Position zumindest teilweise versenkt in der Mantelfläche der Spindelmutter angeordnet sind.

7. Kugelgewindetrieb (100) nach einem oder mehreren der vorhergehenden Ansprüche, **dadurch gekennzeichnet, dass** die Metallplättchen (180, 180') die Fixierung der Kugelumlenkungen (150, 150') bzw. der Kugelrückführung durch einen federnden Anpress-Kontakt sicherstellen.

8. Kugelgewindetrieb (100) nach einem oder mehreren der vorhergehenden Ansprüche, **dadurch gekennzeichnet, dass** zwischen den Metallplättchen (180, 180') und der Kugelrückführung bzw. den Kugelumlenkung(en) (150, 150') eine dämpfende und/oder federnde Zwischenlage vorgesehen wird.

9. Kugelgewindetrieb (100) nach einem oder mehreren der vorhergehenden Ansprüche, **dadurch gekennzeichnet, dass** die Metallplättchen (180, 180') aus Federstahl gefertigt und insbesondere aus Federstahlblech ausgestanzt sind.

10. Kugelgewindetrieb (100) nach einem oder mehreren der vorhergehenden Ansprüche, **dadurch gekennzeichnet, dass** die Metallplättchen (180, 180') eine Wölbung entlang einer Achse aufweisen und bei der Montage so ausgerichtet werden, dass in montierter Endlage das Metallplättchen eine dauernde Druckkraft auf eine Kugelrückführung bzw. die Kugelumlenkung(en) (150, 150') ausübt.

11. Kugelgewindetrieb (100) nach Anspruch 1-10 1, **dadurch gekennzeichnet, dass** mindestens ein Metallplättchen (180) eine radiale Durchtrittsöffnung (170, 170') vollflächig verschliesst.

12. Kugelgewindetrieb (100) nach Anspruch 1-10, **dadurch gekennzeichnet, dass** mindestens ein Metallplättchen (180) die radiale Durchtrittsöffnung (170, 170') teilweise überdeckt.

13. Kugelgewindetrieb (100) nach Anspruch 1-10 1, **dadurch gekennzeichnet, dass** mindestens ein Metallplättchen (180) mehrere radiale Durchtrittsöffnungen (170, 170') ganz oder teilweise überdeckt.

## Claims

1. Ball screw drive (100) comprising:
- a threaded spindle (110) and
- a spindle nut (120) which at least partially surrounds the threaded spindle (110) coaxially, wherein the spindle nut has a substantially cylindrical outer surface (120);
- a plurality of balls (130) circulating in the intermediate space between the threaded spindle (110) and the spindle nut (120) in a helical ball channel (140);
and
- at least one ball return having two ball deflections (150, 150') and a transfer channel (160) extending between them; wherein the ball deflections (150, 150') are arranged in radial passage openings (170, 170') in the spindle nut (120) such that, depending on the direction of rotation of the ball screw drive (100), the balls (130) are radially lifted out of the ball channel (140) by the one ball deflection (150) and deflected into the transfer channel (160) and, after passing through the latter, are guided by the other ball deflection device (150') from the transfer channel (160) back into the ball channel (140);
- wherein the transfer channel bridges a plurality of turns of the helical ball track;
wherein
one or more metal plates (180) are provided on the spindle nut, which are arranged offset inwards from the shell surface in and/or adjacent to the radial through-openings (170, 170') and span the ball return over a large area; and thus fix the ball return with its ball deflections (150, 150') in a target position in the shell of the spindle nut (120), wherein the shell surface of the spindle nut (120) is not protruding beyond the end-mounted metal plates (180, 180'); **characterized in that** the metal plates (180, 180'), in and/or adjacent to the through-openings (170, 170') of the spindle nut (120), are spot-welded, glued or clamped therein.

2. Ball screw drive (100) according to claim 1, **characterized in that** the transfer channel (160) is designed as a longitudinally pressed-in channel open radially outward or as a longitudinal bore (210) which is introduced into the shell of the spindle nut (120) parallel to the axis of rotation of the spindle nut (120).

3. Ball screw drive (100) according to claim 1 or 2, **characterized in that** the ball return is designed in one piece with two ball deflections (150, 150') and a tubular transfer channel (160) arranged therebetween.

4. Ball screw drive (100) according to claim 1 or 2, **characterized in that** the ball return comprises two ball deflections designed in one piece and inserted separately in radial passage openings (170, 170') and a longitudinal bore (210) located between them as a transfer channel.

5. Ball screw drive (100) according to one or more of claims 1-4, **characterized in that** the metal plates (180, 180') in their final assembled position are flush with the shell surface of the spindle nut (120).

6. Ball screw drive (100) according to one or more of claims 1-4, **characterized in that** the metal plates (180, 180') in their final assembled position are at least partially recessed in the shell surface of the spindle nut.

7. Ball screw drive (100) according to one or more of the preceding claims,
**characterized in that** the metal plates (180, 180') ensure the fixation of the ball deflections (150, 150') or the ball return by means of a spring-loaded pressing contact.

8. Ball screw drive (100) according to one or more of the preceding claims,
**characterized in that** a damping and/or spring-loaded intermediate layer is provided between the metal plates (180, 180') and the ball return or ball deflection(s) (150, 150').

9. Ball screw drive (100) according to one or more of the preceding claims,
**characterized in that** the metal plates (180, 180') are made of spring steel and, in particular, are punched from spring steel sheet.

10. Ball screw drive (100) according to one or more of the preceding claims,
**characterized in that** the metal plates (180, 180') have a curvature along an axis and are aligned during assembly so that, in the assembled end position, the metal plate exerts a permanent compressive force on a ball return or the ball deflection(s) (150, 150').

11. Ball screw drive (100) according to claims 1-10, **characterized in that** at least one metal plate (180) completely closes a radial passage opening (170, 170').

12. Ball screw drive (100) according to claims 1-10, **characterized in that** at least one metal plate (180) partially covers the radial passage opening (170, 170').

13. Ball screw drive (100) according to claims 1-10, **characterized in that** at least one metal plate (180) completely or partially covers a plurality of radial passage openings (170, 170').

## Revendications

1. Vis à billes (100) comprenant :
- une broche filetée (110) et
- un écrou de broche (120) qui entoure au moins partiellement la broche filetée (110) de manière coaxiale, l'écrou de broche présentant une surface d'enveloppe (120) essentiellement cylindrique ;
- une pluralité de billes (130) qui circulent dans l'espace entre la broche filetée (110) et l'écrou de broche (120) dans un canal à billes hélicoïdal (140) ; et
- au moins un retour de billes avec deux renvois de billes (150, 150') et un canal de transfert (160) s'étendant entre ceux-ci ; les renvois de billes (150, 150') étant disposés dans des ouvertures de passage radiales (170, 170') dans l'écrou de broche (120) de telle sorte que les billes (130), selon le sens de rotation de la vis à billes (100), sont soulevées radialement de l'un des renvois de billes (150) hors du canal à billes (140) et déviées dans le canal de transfert (160) et, après avoir traversé celui-ci, sont renvoyées par l'autre renvoi de billes (150') du canal de transfert (160) dans le canal à billes (140) ;
- le canal de transfert enjambant plusieurs spires de la piste à billes hélicoïdale ;
dans laquelle
une ou plusieurs plaquettes métalliques (180) sont prévues sur l'écrou de broche, qui sont disposées dans et/ou à proximité des ouvertures de passage radiales (170, 170') en étant décalées vers l'intérieur par rapport à la surface d'enveloppe et recouvrent à plat le retour de billes et fixent ainsi le retour de billes avec ses renvois de billes (150, 150') dans une position de consigne dans l'enveloppe de l'écrou de broche (120), la surface d'enveloppe de l'écrou de broche (120) n'étant pas dépassée par les plaquettes métalliques (180, 180') montées ;
**caractérisée en ce que**
les plaquettes métalliques (180, 180') sont soudées par points, collées ou coincées dans et/ou à proximité des ouvertures de passage (170, 170') de l'écrou de broche (120).

2. Vis à billes (100) selon la revendication 1, **caractérisée en ce que** le canal de transfert (160) est réalisé sous la forme d'un canal pressé longitudinalement, ouvert radialement vers l'extérieur, ou sous la forme d'un alésage longitudinal (210) qui est pratiqué dans l'enveloppe de l'écrou de broche (120) parallèlement à l'axe de rotation de l'écrou de broche (120).

3. Vis à billes (100) selon la revendication 1 ou 2,
**caractérisée en ce que** le retour de billes est réalisé d'une seule pièce avec deux renvois de billes (150, 150') et un canal de transfert tubulaire (160) disposé entre ceux-ci.

4. Vis à billes (100) selon la revendication 1 ou 2,
**caractérisée en ce que** le retour de billes comprend deux renvois de billes réalisés d'une seule pièce et insérés séparément dans des ouvertures de passage radiales (170, 170') ainsi qu'un alésage longitudinal (210) situé entre ceux-ci et servant de canal de transfert.

5. Vis à billes (100) selon l'une ou plusieurs des revendications 1 à 4, **caractérisée en ce que** les plaquettes métalliques (180, 180') se terminent en affleurement avec la surface d'enveloppe de l'écrou de broche (120) dans leur position finale de montage.

6. Vis à billes (100) selon l'une ou plusieurs des revendications 1 à 4, **caractérisée en ce que** les plaquettes métalliques (180, 180') sont disposées au moins partiellement noyées dans la surface d'enveloppe de l'écrou de broche dans leur position finale de montage.

7. Vis à billes (100) selon l'une ou plusieurs des revendications précédentes, **caractérisée en ce que** les plaquettes métalliques (180, 180') assurent la fixation des renvois de billes (150, 150') ou du retour de billes par un contact de pression élastique.

8. Vis à billes (100) selon l'une ou plusieurs des revendications précédentes, **caractérisée en ce qu'**une couche intermédiaire amortissante et/ou élastique est prévue entre les plaquettes métalliques (180, 180') et le retour de billes ou le ou les renvoi(s) de billes (150, 150').

9. Vis à billes (100) selon l'une ou plusieurs des revendications précédentes, **caractérisée en ce que** les plaquettes métalliques (180, 180') sont fabriquées en acier à ressort et sont en particulier découpées dans une tôle d'acier à ressort.

10. Vis à billes (100) selon l'une ou plusieurs des revendications précédentes, **caractérisée en ce que** les plaquettes métalliques (180, 180') présentent une courbure le long d'un axe et sont orientées lors du montage de telle sorte que, en position finale de montage, la plaquette métallique exerce une force de pression permanente sur un retour de billes ou le ou les renvoi(s) de billes (150, 150').

11. Vis à billes (100) selon les revendications 1 à 10,
**caractérisée en ce qu'**au moins une plaquette métallique (180) ferme complètement une ouverture de passage radiale (170, 170').

12. Vis à billes (100) selon les revendications 1 à 10,
**caractérisée en ce qu'**au moins une plaquette métallique (180) recouvre partiellement l'ouverture de passage radiale (170, 170').

13. Vis à billes (100) selon les revendications 1 à 10,
**caractérisée en ce qu'**au moins une plaquette métallique (180) recouvre entièrement ou partiellement plusieurs ouvertures de passage radiales (170, 170').
